# EUROPÄISCHE PATENTSCHRIFT

(11) **EP 0 799 673 B1**
(45) Veröffentlichungstag und Bekanntmachung des Hinweises auf die Patenterteilung: **10.04.2002**
(21) Anmeldenummer: 97102968.1
(22) Anmeldetag: 24.02.1997
(51) Int. Cl.: B23Q 7/02

(54) **Werkstücktisch für eine Werkzeugmaschine**
Work table for a machine tool
Table porte-pièce pour une machine outil

(30) Priorität: 02.04.1996 DE 19613129
(43) Veröffentlichungstag der Anmeldung: 08.10.1997
(73) Patentinhaber: CHIRON-WERKE GMBH & CO. KG, 78532 Tuttlingen (DE)
(72) Erfinder: Grund, Peter, Dr., 78647 Trossingen (DE)
(74) Vertreter: Otten, Hajo, Dr.-Ing.

(56) Entgegenhaltungen:
- DE-A- 3 924 335
- US-A- 4 803 765

## Beschreibung

Die vorliegende Erfindung betrifft einen Werkstücktisch für eine Werkzeugmaschine, der zwischen zwei Endstellungen hin- und herbewegbar ist und einen Verdrehantrieb aufweist, der ein mit dem Werkstücktisch zu dessen Verdrehen verbundenes Zahnradteil, eine mit diesem in Eingriff befindliche Zahnstange sowie einen mediumsbetätigten Verstellantrieb zum Verschieben der Zahnstange aufweist, die dabei eine durch Anschläge begrenzte Hubbewegung zwischen zwei den Endstellungen des Werkstücktisches entsprechenden Endlagen durchführt.

Ein derartiger Werkstücktisch, der häufig auch Drehtisch genannt wird, ist aus der Praxis bekannt (siehe z.B. US-A-4 803 765).

Die DE 39 24 335 A1 beschreibt eine Werkzeugmaschine mit einem Drehtisch, der über ein Getriebe mit einem Antriebsmotor sowie mit mehreren Zusatzmotoren verbunden ist. Über eine mit der Drehung des Drehtisches gekoppelte Kurvenscheibe werden diese Motoren so angesteuert, daß der Drehtisch aus einer Ruheposition bis zu einer Umschaltposition mit einer ersten, im wesentlichen konstanten Kraft bewegt wird. Ab Erreichen der Umschaltposition üben die Motoren auf den Drehtisch eine zweite, der ersten Kraft entgegengesetzt gerichtete und im wesentlichen konstante Kraft aus, bis der Drehtisch eine zweite Ruheposition erreicht hat.

Bei vielen Werkzeugmaschinen ist der Werkstücktisch in eine Bearbeitungsseite sowie in eine Bestückungsseite aufgeteilt, wobei auf der Bearbeitungsseite ein erstes Werkstück bearbeitet werden kann, während auf der Bestückungsseite ein zweites, noch zu bearbeitendes Werkstück gerade eingespannt wird. Bearbeitungsseite und Bestückungsseite sind dabei häufig durch eine sogenannte Spritzschutzwand voneinander getrennt, um die Bedienungsperson vor herumfliegenden Spänen und herumspritzendem Bohrwasser zu schützen.

Der Spindelstock der Werkzeugmaschine sowie der Werkstücktisch führen zum Werkstückwechsel eine Relativbewegung zueinander durch, bei der Bearbeitungsseite und Bestückungsseite miteinander vertauscht werden.

Eine Möglichkeit, diesen Werkstückwechsel durchzuführen, besteht darin, den eingangs erwähnten Drehtisch zu verwenden. Derartige Drehtische werden häufig dann eingesetzt, wenn die damit aufgebaute Werkzeugmaschine einen möglichst geringen Platzbedarf aufweisen soll.

Zum Werkstückwechsel wird der Werkstücktisch durch den Verdrehantrieb abwechselnd um ± 180° verdreht, wobei der Werkstücktisch in seinen Endstellungen z.B. durch eine Hirth-Verzahnung positioniert ist. Soll der Werkstücktisch verdreht werden, so wird er zunächst aus der Hirth-Verzahnung ausgehoben, bevor eine Zahnstange dann von ihrer einen Endlage in die andere geschoben wird, wobei sie ein Zahnradteil und über dieses den Werkstücktisch in die jeweils andere Endstellung verdreht. Nach dem Ende dieser Drehbewegung wird der Werkstücktisch wieder auf die Hirth-Verzahnung abgesenkt.

Der Verstellantrieb zum Verschieben der Zahnstange arbeitet in der Regel mit Druckluft, wobei die beiden Stirnflächen der Zahnstange als Schubseiten eines doppelt-mediumsbetätigten Schubkolbens wirken. Am Ende ihres jeweiligen Hubes läuft die Zahnstange mit der jeweils nicht mit Druckluft beaufschlagten Stirnseite gegen einen Anschlag, so daß der Hub in beiden Richtungen durch Anschläge begrenzt ist.

Das allgemeine Bestreben in der Maschinenbauindustrie geht dahin, nicht nur den Werkzeugwechsel sondern auch den Werkstückwechsel in immer kürzeren Zeitabständen durchzuführen, so daß das Verdrehen des Werkstücktisches in möglichst kurzer Zeit erfolgen soll. Eine sehr schnelle Drehung des Werkstücktisches bedeutet jedoch, daß die Zahnstange mit einer hohen Geschwindigkeit gegen die Anschläge läuft, so daß es zu harten Stößen und Erschütterungen kommt. Derartige Stöße und Erschütterungen sind jedoch im Hinblick auf die Aufspannung der Werkstücke von Nachteil, da es durch diese Erschütterungen zu einer Dejustierung der Werkstückaufspannungen kommen kann, so daß die Reproduzierbarkeit der Bearbeitung beeinträchtigt wird. Weiterhin ist zu bedenken, daß der Werkstücktisch mit den aufgespannten Vorrichtungen eine sehr große Masse aufweist, so daß bei einer entsprechenden Drehgeschwindigkeit in den Endlagen der Zahnstange eine relativ hohe Drehenergie vernichtet werden muß. Bei der bekannten Werkzeugmaschine sind hierfür Stoßdämpfer vorgesehen, die sich an den Anschlägen nach außen von der Zahnstange weg erstrecken und mit ihren Kolben auf die Stirnseiten der Zahnstange zuweisen. Wegen der hohen zu vernichtenden Drehenergie sind diese Stoßdämpfer sehr ausladend, so daß sie insgesamt zu einer großen Baubreite der bekannten Werkzeugmaschine beitragen.

Allgemein geht das Bestreben bei derartigen Werkzeugmaschinen dahin, möglichst klein bauende Werkzeugmaschinen bereitzustellen, die einen möglichst schnellen Werkstückwechsel ohne Rückwirkungen auf die Arbeitsgenauigkeit der Werkzeugmaschine ermöglichen. Um diesem Bedarf gerecht zu werden, ist es Aufgabe der vorliegenden Erfindung, den eingangs genannten Werkstücktisch derart weiterzubilden, daß er bei konstruktiv einfachem Aufbau ein schnelles und möglichst stoß- und ruckfreies Verdrehen ermöglicht, wobei die Außenabmaße der den neuen Werkstücktisch beinhaltenden Werkzeugmaschine möglichst klein sein sollen.

Bei dem eingangs erwähnten Werkstücktisch wird diese Aufgabe dadurch gelöst, daß eine Vorrichtung vorgesehen ist, die die Zahnstange zu Beginn der Hubbewegung mit einer höheren Vorschubkraft als während des restlichen Hubes beaufschlagt (Anspruch 1).

Die der Erfindung zugrundeliegende Aufgabe wird auf diese Weise vollkommen gelöst. Die Erfinder der vorliegenden Anmeldung haben nämlich erkannt, daß durch eine sogenannte Startbeschleunigung mit einer höheren Vorschubkraft zunächst die träge Masse des Werkstücktisches überwunden werden muß, bevor dann mit der üblichen Vorschubkraft die restliche Drehbewegung durchgeführt wird. Diese anfänglich höhere Vorschubkraft sorgt damit für ein deutlich schnelleres Verdrehen des Werkstücktisches zwischen seinen beiden Endstellungen, so daß der Werkstückwechsel dabei deutlich beschleunigt wird. Es ist jetzt durchaus möglich, durch die neue Vorrichtung die Beaufschlagung der Zahnstange derart zu wählen, daß anfänglich eine hohe Vorschubkraft, während des mittleren Verdrehbereiches eine übliche Vorschubkraft und zum Ende der Drehbewegung hin eine geringere Vorschubkraft ausgeübt wird, so daß insgesamt die übliche Dämpfung ausreicht, den sich drehenden Werkstücktisch in seinen Endlagen abzubremsen.

In einer Weiterbildung ist es dann bevorzugt, wenn die Vorrichtung einen Hilfs-Verstellantrieb umfaßt, der die Zahnstange zu Beginn der Hubbewegung vorübergehend mit einer zusätzlichen Vorschubkraft beaufschlagt.

Diese Maßnahme ist konstruktiv von Vorteil, die vorübergehende zusätzliche Vorschubkraft kann z.B. auf elektrischem oder magnetischem Wege aufgebracht werden. Ein weiterer Vorteil liegt hier darin, daß dieser Hilfs-Verstellantrieb auch nachgerüstet werden kann, so daß auch bestehende Werkzeugmaschinen nachträglich auf schnelleres Verdrehen des Werkstücktisches umgerüstet werden können.

Die der Erfindung zugrundeliegende Aufgabe wird damit auch durch einen ggf. nachrüstbaren Hilfs-Verstellantrieb für einen Verdrehantrieb für einen Werkstücktisch einer Werkzeugmaschine gelöst, der zwischen zwei Endstellungen hin- und herbewegbar ist, wobei der Verdrehantrieb ein mit dem Werkstücktisch zu dessen Verdrehen verbundenes Zahnradteil, eine mit diesem in Eingriff befindliche Zahnstange sowie einen mediumsbetätigten Verstellantrieb zum Verschieben der Zahnstange aufweist, die dabei eine durch Anschläge begrenzte Hubbewegung zwischen zwei den Endstellungen des Werkstücktisches entsprechenden Endlagen durchführt, wobei der Hilfs-Verstellantrieb die Zahnstange zu Beginn der Hubbewegung vorübergehend mit einer zusäztlichen Vorschubkraft beaufschlagt (Anspruch 20).

Dieser Hilfs-Verstellantrieb hat den oben bereits erwähnten Vorteil, daß er nachrüstbar ist.

Weiter ist es hier bevorzugt, wenn der Hilfs-Verstellantrieb mediumsbetätigt ist, wobei vorzugsweise für jede Hubrichtung der Zahnstange ein Hilfs-Verstellantrieb vorgesehen ist.

Bei dieser Maßnahme ist von Vorteil, daß das gleiche Funktionsprinzip bzw. Betätigungsmedium für den Hilfs-Verstellantrieb verwendet werden kann, wie für den ursprünglichen Verstellantrieb. Dies ermöglicht insgesamt einen konstruktiv einfachen Aufbau, da keine zusätzlichen Energiequellen vorgesehen werden müssen.

Weiter ist es bevorzugt, wenn der Verstellantrieb an beiden Stirnseiten der Zahnstange je einen auf diese wirkenden Schubkolben umfaßt und der Hilfs-Verstellantrieb an den beiden Stirnseiten je einen auf diese wirkenden Hilfs-Schubkolben beinhaltet, der vorzugsweise eine größere Kolbenfläche aufweist als der Schubkolben und einen kürzeren Hub als dieser durchführt.

Hier ist von Vorteil, daß sozusagen zwei hintereinander geschaltete Schubkolben verwendet werden können, wobei der Hilfs-Schubkolben wegen seiner größeren Kolbenfläche bei gleichem Mediumsdruck eine größere Schubkraft auf die Zahnstange ausübt als der standardmäßige Schubkolben. Da der Hub des Hilfs-Schubkolbens deutlich kürzer ist als der Hub der Zahnstange, wirkt die zusätzliche Schubkraft durch den Hilfs-Schubkolben nur während eines anfänglichen Abschnittes des Hubes der Zahnstange, so daß auf konstruktiv verblüffend einfache Weise dafür gesorgt wird, daß während der Hubbewegung der Zahnstange zunächst eine größere Vorschubkraft und dann nur noch die übliche Vorschubkraft wirkt.

Diese einfache Konstruktion läßt auch eine denkbar unkomplizierte Nachrüstung bestehender Werkzeugmaschinen mit dem Hilfs-Verstellantrieb zu, der Hilfs-Schubkolben muß lediglich außen auf den üblichen Verstellantrieb aufgesetzt werden, wobei die Kolbenstange des Hilfs-Schubkolbens dann z.B. unmittelbar auf den Schubkolben des ursprünglichen Verstellantriebes wirkt. Danach ist es lediglich noch erforderlich, den Hilfs-Verstellantrieb mit der Mediumsleitung zu verbinden, die bereits den standardmäßigen Verstellantrieb speist und mit Druckenergie versorgt.

Andererseits ist es bevorzugt, wenn die Zahnstange als doppelt-mediumsbetätigter Schubkolben ausgebildet ist, auf dessen beide Stirnseiten abwechselnd ein Betätigungsmedium sowie je ein Hilfs-Schubkolben wirkt, der einen größeren Durchmesser als die Zahnstange an ihren Stirnseiten aufweist und einen kürzeren Hub als die Zahnstange durchführt.

Diese Maßnahme ist konstruktiv von Vorteil, die Zahnstange selbst zeigt nämlich an ihren Stirnseiten mit Druckmedium zu beaufschlagende Flächen, auf die gleichzeitig während eines kurzen Anfangshubes noch der Hilfs-Schubkolben wirkt, der dabei eine zusätzliche Vorschubkraft ausübt.

Dabei ist es bevorzugt, wenn jeder Hilfs-Schubkolben mit seiner Kolbenstange auf die zugeordnete Stirnseite der Zahnstange wirkt, wobei ein Anschlag für den Hilfs-Schubkolben zur Begrenzung des von diesem durchgeführten Hubes vorgesehen ist.

Auch diese Maßnahme ist konstruktiv von Vorteil, da die Hubbewegung des Hilfs-Schubkolbens auf einfache Weise begrenzt wird. Da die Masse des Hilfs-Schubkolbens und damit die zu vernichtende Energie verglichen mit den bei dem Werkstücktisch vorherrschenden Gegebenheiten vernachlässigbar gering ist, wirkt sich der durch den Anschlag des Hilfs-Schubkolbens erzeugte Stoß nicht auf die Bearbeitungsgenauigkeit der neuen Werkzeugmaschine aus.

Insgesamt ist es bevorzugt, wenn zwei Dämpfungsvorrichtungen vorgesehen sind, die jeweils zwischen einem Anschlag für die Zahnstange und dieser selbst wirken, um den sich drehenden Werkstücktisch in seinen Endstellungen abzubremsen.

Diese Maßnahme ist an sich bekannt, sie dient dazu, die Bewegungsenergie des Werkstücktisches auf möglichst stoßfreie Weise zu vernichten, um die Betriebsgenauigkeit der Werkzeugmaschine nicht zu beeinträchtigen.

Dabei ist es bevorzugt, wenn die Dämpfungsvorrichtungen einen gesteuerten Gegendruck zum gezielten Abbremsen der sich bewegenden Zahnstange aufbauen.

Diese Maßnahme, die auch für sich genommen bei dem eingangs erwähnten Werkstücktisch neu und erfinderisch ist, sorgt nun für ein besonders weiches Abfangen der Drehbewegung des Werkstücktisches, wobei diese Vorteile auch dann erzielt werden, wenn keine Vorrichtung vorgesehen ist, die für eine vorübergehend höhere Vorschubkraft sorgt.

Bei dieser Maßnahme können der Schubkolben und/oder der Hilfs-Schubkolben auf der jeweils nicht angeschobenen Seite der Zahnstange jetzt zur Dämpfung verwendet werden, indem in den entsprechenden Druckkammern ein Gegendruck aufgebaut wird, der ein gezieltes Abbremsen der Zahnstange ermöglicht. Dieser Gegendruck kann z.B. kurz vor Erreichen der Endlage der Zahnstange relativ schnell auf einen hohen Wert erhöht werden, so daß ein Großteil der Bewegungsenergie vernichtet wird. Danach wird der Gegendruck dann gezielt abgebaut, so daß dieser in etwa vollständig zurückgegangen ist, wenn die Zahnstange ihre Endlage erreicht hat, so daß ein "Prellen" vermieden wird.

Auch diese Maßnahme ermöglicht jetzt ein schnelleres Verdrehen des Werkstücktisches, da dieser mit einer höheren Drehgeschwindigkeit angetrieben werden kann, ohne daß es zu stärkeren Stößen beim Abbremsen des Werkstücktisches kommt, die die Betriebsgenauigkeit und Reproduzierbarkeit der damit ausgerüsteten Werkzeugmaschinen nachteilig beeinflussen würden. Es ist z.B. möglich, den Betriebsdruck für den üblichen Verstellantrieb zu erhöhen, so daß während der gesamten Hubbewegung der Zahnstange eine größere Vorschubkraft wirkt, die folglich auch zu einem schnelleren Verdrehen des Werkstücktisches führt. Die damit verbundene höhere Drehenergie, die bei Erreichen der Endlage vernichtet werden muß, wird jetzt durch den gesteuerten Gegendruck abgefangen.

Auch die neue Dämpfungsvorrichtung kann für sich genommen nachgerüstet werden, wobei im einfachsten Falle lediglich weitere Druckluftzuführungen in die Druckkammern beider Seiten der Zahnstange bereitgestellt werden müssen, wobei über diese beiden weiteren Druckluftzuführungen dann z.B. mittels eines Kompressors für den gesteuerten Verlauf des Gegendruckes gesorgt wird. Zu diesem Zweck kann natürlich auch ein bereits vorhandenes Entlüftungsventil umgerüstet werden.

Bei dieser Dämpfungsvorrichtung ist - wie bereits erwähnt - von Vorteil, daß sie auch bei bestehenden Werkzeugmaschinen nachgerüstet werden kann, so daß dort entweder ein weicheres Abfangen des sich drehenden Werkstücktisches möglich wird oder aber ein schnelleres Verdrehen des Werkstücktisches, wobei durch die neue Dämpfungsvorrichtung dafür gesorgt wird, daß keine stärkeren Stöße entstehen als bei der vorherigen Auslegung des Verdrehantriebes.

Dabei ist es bevorzugt, wenn die jeweilige Dämpfungsvorrichtung an dem Verstellantrieb und/oder dem Hilfs-Verstellantrieb ausgebildet ist und vorzugsweise bei dem jeweils nicht zum Antrieb der Zahnstange verwendeten Hilfs-Schubkolben auf dessen Schubseite und/oder auf der zugeordneten Stirnseite der Zahnstange einen Gegendruck erzeugt, der während des durch die Zahnstange bewirkten Rückhubes dieses Hilfs-Schubkolbens die Hubbewegung der Zahnstange abbremst.

Diese Maßnahme ist konstruktiv von Vorteil, da sie auf sehr elegante Weise die Vorteile des Hilfs-Verstellantriebes sowie der neuen Dämpfungsvorrichtung miteinander vereinigt. Erste Versuche bei der Anmelderin der vorliegenden Erfindung haben ergeben, daß durch diese Maßnahmen eine typische Werkstückwechselzeit von 2,5 Sekunden auf 1,5 Sekunden abgesenkt werden kann. Da bei den eingangs genannten Werkzeugmaschinen um Zeitvorteile im Bereich von Zehntelsekunden gerungen wird, stellt ein Zeitvorteil von 1 Sekunde einen ganz enormen Fortschritt dar, der die Werkstück-zu-Werkstück-Zeit bei einer so ausgerüsteten Werkzeugmaschine um ein unerwartet hohes Maß verringert.

Zusätzlich oder alternativ kann die Bedämpfung auch an der Zahnstange direkt erfolgen. Hierzu ist nicht einmal ein gesondertes Entlüftungsventil erforderlich, vielmehr kann der Druckluftanschluß während der Zeit, in der er die Zahnstange nicht beaufschlagt, als Entlüftung dienen, wozu eine äußere Beschaltung der Druckluftschläuche nur entsprechend ausgelegt sein muß. Konstruktive Änderungen an bisherigen Verstellantrieben sind damit nicht erforderlich, sie müssen nur auf die erfindungsgemäße Weise betrieben werden, um das gewünschte Dämpfungsverhalten zu erzielen.

Ingesamt ist es dabei bevorzugt, wenn der Gegendruck einen gesteuerten Druckverlauf aufweist, wobei vorzugsweise jeder Hilfs-Schubkolben auf seiner Schubseite und/oder der Schubkolben an seinen Stirnseiten jeweils eine durch ein Entlüftungsventil zu entlüftende Druckkammer aufweist und das Entlüftungsventil ein gesteuertes Ventil ist, so daß die Entlüftung der Druckkammer während des durch die Zahnstange bewirkten Rückhubes derart gezielt freigegeben wird, daß sich zur Dämpfung zunächst ein hoher Gegendruck aufbaut, der entlüftet oder begrenzt wird, wenn die Zahnstange sich ihrer Endlage nähert.

Hier ist von Vorteil, daß auf konstruktiv einfache Weise für den gesteuerten Gegendruck gesorgt wird. Nach dem Verschieben der Zahnstange in die eine Endlage weist die Druckkammer des diese Verschiebung bewirkenden Hilfs-Schubkolbens den Arbeitsdruck des Betriebsmediums auf. Wird jetzt die Zahnstange in die ursprüngliche Ausgangslage zurückgeschoben, so gelangt sie gegen Ende ihrer Bewegung in Anlage mit der Kolbenstange des Hilfs-Schubkolbens, der folglich ebenfalls einen Rückhub durchführt. Während dieses Rückhubes wird nun das Entlüftungsventil der Druckkammer zunächst geschlossen gehalten, so daß sich allmählich ein hoher Gegendruck aufbaut. In Abhängigkeit von der Lage des Hilfs-Schubkolbens wird dieses Entlüftungsventil dann geöffnet, so daß die Druckkammer gezielt entlüftet wird, bis die Zahnstange ihre Endlage erreicht hat.

Weiterhin ist es bevorzugt, wenn die Dämpfungsvorrichtung einen Stoßdämpfer umfaßt, der zwischen Zahnstange und Anschlag wirkt.

Hier ist von Vorteil, daß durch den Stoßdämpfer noch nicht verbrauchte restliche Drehenergie des Werkstücktisches vernichtet werden kann. Dies ist vor dem Hintergrund zu sehen, daß die Drehenergie des Werkstücktisches unter anderem von dem Gewicht der jeweils verwendeten Aufspannvorrichtungen abhängt, so daß bei unterschiedlich gerüsteten Werkstücktischen unterschiedliche Drehenergien zu vernichten sind. Um jetzt aber das gezielte Aufbauen des Gegendrucks möglichst einfach gestalten zu können, wird zusätzlich ein Stoßdämpfer vorgesehen, der die Schwankungen der Restenergie kompensiert, die durch den Gegendruck nicht aufgefangen wurde. Mit anderen Worten, der Stoßdämpfer kommt immer dann zum Einsatz, wenn die Drehenergie des Werkstücktisches größer war als sie durch den Gegendruck aufgefangen und vernichtet werden konnte. Damit gestaltet sich aber die Steuerung der neuen Werkzeugmaschine sehr einfach.

In einer Weiterbildung ist es dann bevorzugt, wenn der Stoßdämpfer zwischen Zahnstange und Hilfs-Schubkolben wirkt, wobei der Stoßdämpfer vorzugsweise in der Zahnstange und/oder in der Kolbenstange des Hilfs-Schubkolbens angeordnet ist.

Hier ist von Vorteil, daß der Stoßdämpfer nicht mehr unbedingt außen auf den Hilfs-Verstellantrieb aufgebaut werden muß, so daß die neue Werkzeugmaschine dadurch sehr schmal baut. Verglichen mit der eingangs erwähnten Werkzeugmaschine aus dem Stand der Technik muß nämlich der Stoßdämpfer deutlich weniger Energie vernichten, da ein Großteil der Drehenergie durch den Gegendruck vernichtet wird. Die Stoßdämpfer sind hier also deutlich kleiner als beim Stand der Technik, so daß sie schon bei außenliegender Montage für eine deutlich schmalere Werkzeugmaschine sorgen. Dies gilt erst recht dann, wenn sie in der Zahnstange und/oder in der Kolbenstange des Hilfs-Schubkolbens untergebracht sind. Dies ist wie gesagt möglich, da die Stoßdämpfer hier deutlich kleinere Abmaße aufweisen als beim Stand der Technik, wo eine derartige Anordnung nicht möglich wäre.

Bei der neuen Dämpfungsvorrichtung ist es dann noch bevorzugt, wenn das gesteuerte Ventil ein Drosselventil ist, das bei Erreichen eines Öffnungsdruckes oder einer bestimmten Stellung des Kolbens vorzugsweise automatisch die Druckkammer entlüftet oder mit konstantem Drosselquerschnitt arbeitet.

Hier ist zum einen von Vorteil, daß durch das automatische Öffnen der gesteuerte Gegendruck sozusagen automatisch aufgebaut und wieder abgebaut bzw. nach oben begrenzt wird, gesonderte Steuereinrichtungen dafür sind nicht erforderlich, so daß diese Maßnahme insbesondere konstruktiv von Vorteil ist.

Bei dem konstanten Drosselquerschnitt ist von Vorteil, daß ein konstruktiv sehr einfaches Ventil eingesetzt werden kann. Da dieses Ventil sozusagen immer geöffnet ist, ergibt sich eine konstante Abfuhr der Abluft, also eine kontinuierliche Entlüftung des entsprechenden Druckraumes, wobei die Geschwindigkeit des Druckauf- und -abbaues maßgeblich durch den Drosselquerschnitt bestimmt wird. Weil dieses Drosselventil keine bewegten Teile aufweist, ist es nicht nur preiswert sondern auch sehr betriebssicher.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der beigefügten Zeichnung dargestellt und wird in der nachfolgenden Beschreibung näher erläutert. Es zeigen:
- Fig. 1: eine schematische Draufsicht auf den erfindungsgemäßen Werkstücktisch mit schematisch angedeutetem Verdrehantrieb;
- Fig. 2: einen Verstellantrieb, wie er bei dem Verdrehantrieb gemäß Fig. 1 verwendet werden kann, wobei die neue Dämpfungsvorrichtung verwendet und eine vorübergehend höhere Vorschubkraft bereitgestellt wird;
- Fig. 3: ein weiteres Ausführungsbeispiel des Verstellantriebes gemäß Fig. 1, wobei der neue Hilfs-Verstellantrieb sowie die neue Dämpfungsvorrichtung verwendet werden; und
- Fig. 4: eine Prinzipskizze der Druckluftsteuerung für den Werkstücktisch aus Fig. 1, in einem zu den Figuren 2 und 3 nochmals abgewandelten Ausführungsbeispiel des Verstellantriebes.

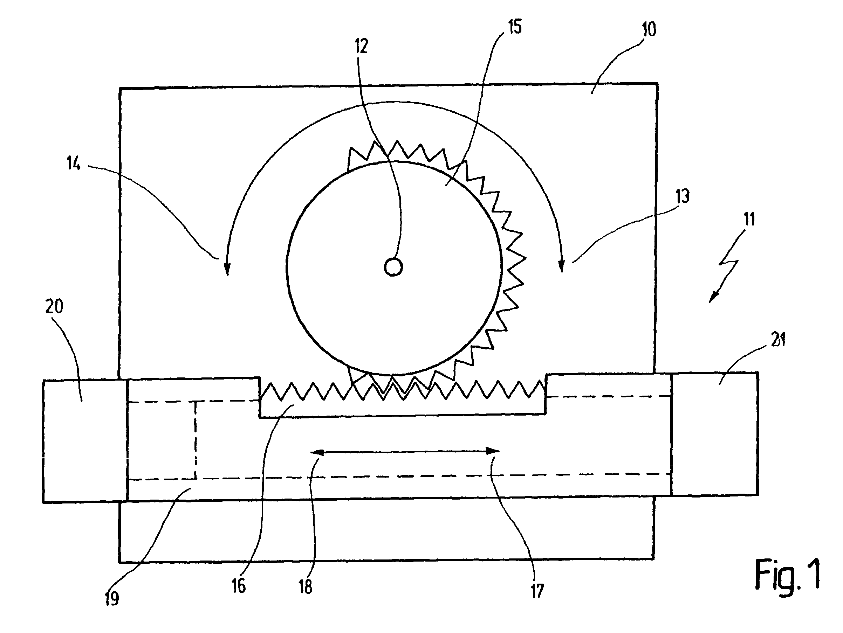

In Fig. 1 ist mit 10 ein sehr schematisch hergestellter Werkstücktisch bezeichnet, der als Drehtisch Verwendung in einer aus Übersichtlichkeitsgründen nicht dargestellten Werkzeugmaschine findet. Der Werkstücktisch 10 weist einen Verdrehantrieb 11 auf, durch den der Werkstücktisch 10 um seine Hochachse 12 um ± 180° in Richtung eines Doppelpfeiles 13/14 verdreht werden kann.

Dieser Werkstücktisch 10 ist auf seiner Oberseite üblicherweise in eine Bestückungsseite sowie eine Bearbeitungsseite unterteilt, wobei durch Verdrehen des Werkstücktisches 10 die Bestückungsseite und die Bearbeitungsseite untereinander vertauscht werden können.

Zu diesem Zweck umfaßt der Verdrehantrieb 11 ein Zahnradteil 15, das mit dem Werkstücktisch 10 derart verbunden ist, daß es diesen in Richtung der Doppelpfeile 13/14 verdreht. Im Eingriff mit dem Zahnradteil 15 steht eine längsverschiebliche Zahnstange 16, die längs des Doppelpfeiles 17/18 hin- und hergeschoben werden kann. Die Zahnstange 16 sitzt in einem Gehäuse 19, an dessen Enden Verstellantriebe 20 und 21 zum Verschieben der Zahnstange 16 in Richtung des Doppelpfeiles 17/18 vorgesehen sind.

Der Verstellantrieb 20 verschiebt die Zahnstange 16 in Richtung des Pfeiles 17, so daß sich der Werkstücktisch in Richtung des Pfeiles 14 dreht. In der in Fig. 1 gezeigten Situation hat dieses Verdrehen stattgefunden, so daß jetzt der Verstellantrieb 21 die Zahnstange 16 in Richtung des Pfeiles 18 verschieben kann, um dadurch den Werkstücktisch 10 in Richtung des Pfeiles 13 zurückzuschwenken.

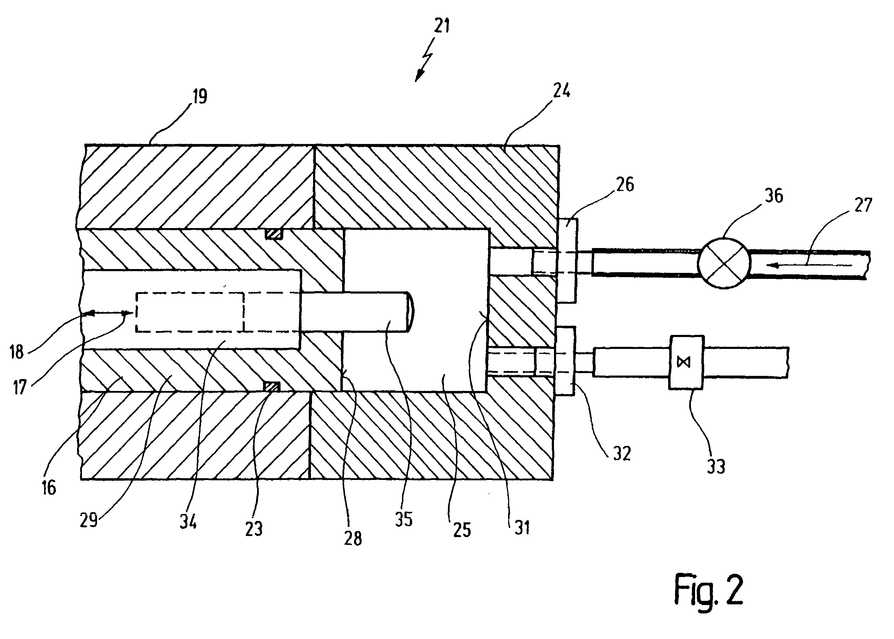

Fig. 2 zeigt jetzt ein erstes Ausführungsbeispiel des Verstellantriebes 21 in einer schematischen Darstellung im Längsschnitt. Es ist zu verstehen, daß der Verstellantrieb 20 spiegelbildlich zu dem Verstellantrieb 21 aufgebaut und angeordnet ist.

In Fig. 2 ist zu erkennen, daß die Zahnstange 16 eine Dichtung 23 aufweist, durch die sie in ihrem rohrförmigen Gehäuse 19 druckdicht geführt ist. An das Gehäuse 19 schließt sich ein Gehäuse 24 des Verstellantriebes 21 an, das im Inneren eine Druckkammer 25 aufweist. Die Zahnstange 16 ragt in diese Druckkammer 25 hinein und kann über einen Druckluftanschluß 26 mit einem bei 27 angedeuteten Medium derart an ihrer Stirnseite 28 beaufschlagt werden, daß sie sich in Richtung des Pfeiles 18 in Fig. 2 nach links bewegt. Die Zahnstange 16 wirkt somit wie ein Schubkolben 28, wobei sie wegen der identischen Ausbildung des Verstellantriebes 21 als doppelt-mediumsbetätigter Schubkolben 29 ausgelegt ist.

Wenn der Verstellantrieb 20 die Zahnstange 16 in Fig. 2 in Richtung des Pfeiles 17 bewegt, so kommt sie schließlich mit ihrer Stirnseite 28 in Anlage mit einem Anschlag 31, wodurch die Hubbewegung der Zahnstange 16 und damit wegen des Eingriffs zwischen Zahnstange 16 und Zahnradteil 15 die Drehbewegung des Werkstücktisches 10 abgestoppt werden.

Um dieses Abstoppen weich zu gestalten, wird in der Druckkammer 25 ein gesteuerter Gegendruck aufgebaut, der gezielt wieder abgebaut wird. Zu diesem Zweck ist ein Ventil 32 vorgesehen, das über eine Entlüftungssteuerung 33 gezielt entlüftet wird. Wenn sich die Zahnstange 16 jetzt in Fig. 2 nach rechts bewegt, so ist das Ventil 32 zunächst geschlossen, so daß sich der Druck in der Druckkammer 25 allmählich erhöht und somit der Bewegung der Zahnstange 16 dämpfend entgegenwirkt. Hat dieser Gegendruck einen bestimmten Wert erreicht, so wird über die Entlüftungssteuerung 33 dieser Gegendruck gesteuert wieder abgebaut oder begrenzt, so daß nach Art einer Zielbremsung die Zahnstange 16 und damit der Werkstücktisch 10 weich in ihre Endlage abgebremst werden.

Über die Entlüftungssteuerung 33 wird das Ventil 32 nicht während der gesamten Rücklaufbewegung der Zahnstange 16 geschlossen, sondern erst während eines letzten Abschnittes dieses Rückhubes, so daß der Gegendruck erst gegen Ende der Drehbewegung aufgebaut wird, so daß das anfängliche Verdrehen ungedämpft und damit schnell erfolgen kann.

Da die zu vernichtende Drehenergie jedoch von der Masse der jeweils auf dem Werkstücktisch angeordneten Vorrichtungen abhängt, ist in der Zahnstange 16 noch ein Stoßdämpfer 34 vorgesehen, der über die Stirnseite 28 mit seinem Kolben 35 vorsteht. Bewegt sich die Zahnstange 16 jetzt in Fig. 2 nach rechts in Richtung des Pfeiles 17, so kommt der Kolben 35 in Anlage mit dem Anschlag 31, so daß während des allerletzten Rückhubes der Zahnstange 16 zusätzlich durch die Dämpfungswirkung des Stoßdämpfers 34 Energie vernichtet wird.

Die insoweit beschriebene Dämpfungsvorrichtung 32, 33, 34, 35 sorgt also für ein weiches Abbremsen des sich drehenden Werkstücktisches 10.

Um jetzt die Drehbewegung des Werkstücktisches 10 zu erhöhen, ist der Druckluftanschluß mit einem Kompressor 36 ausgerüstet, der für eine gesteuerte Vorschubkraft sorgt. Zu Beginn des Hubes der Zahnstange 16 wird ein höherer Druck in der Druckkammer 25 aufgebaut, so daß die Trägheit des Werkstücktisches schnell überwunden werden kann und dieser sich mit einer entsprechend hohen Geschwindigkeit dreht. Sobald diese hohe Drehgeschwindigkeit erreicht ist, wird die Vorschubkraft verringert, indem der Kompressor 36 entsprechend gesteuert wird. Mit dieser verringerten Vorschubkraft, die z.B. nur noch ausreichen muß, um die Reibung der einzelnen Lagerteile zu überwinden, damit die Drehgeschwindigkeit erhalten bleibt, läuft der Werkstücktisch 10 jetzt in seine entsprechend andere Endstellung. Durch die Dämpfungsvorrichtung 32, 33, 34, 35 an dem jeweils anderen Verstellantrieb 21, 20 wird jetzt dafür gesorgt, daß trotz der hohen Drehgeschwindigkeit des Werkstücktisches das Abbremsen weich erfolgt, so daß es nicht zu harten Stößen oder Erschütterungen kommt, die die Reproduzierbarkeit und Betriebssicherheit der Werkzeugmaschine nachteilig beeinflussen könnten.

Während ein Verstellantrieb 20 oder 21 die Zahnstange 16 jeweils antreibt, dient der andere Verstellantrieb 21 oder 20 zur Endlagendämpfung und umgekehrt.

Selbstverständlich ist es nicht erforderlich, den Stoßdämpfer 34 in der Zahnstange 16 unterzubringen, dieser kann vielmehr auch außen auf dem Gehäuse 24 angeordnet sein, so daß er sich in Fig. 2 nach rechts erstreckt. Wegen des zusäztlich durch die Dämpfungsvorrichtung aufgebrachten Gegendruckes ist der Stoßdämpfer 34 jedoch deutlich kleiner auszulegen, als dies beim Stand der Technik erforderlich war, wo die Dämpfung über Gegendruck nicht verwendet wurde. Daher ist es jetzt möglich, den Stoßdämpfer direkt in die Zahnstange 16 einzubauen, so daß sich die Baubreite des Werkstücktisches bzw. der damit ausgerüsteten Werkzeugmaschine deutlich verringert.

Zusammengefaßt sorgt also die gesteuerte Schubkraft z.B. durch den Kompressor 26 für ein schnelleres Verdrehen, während die erhöhte Dämpfung durch das Ventil 32 sowie die Entlüftungssteuerung 33 dafür sorgen, daß die jetzt höhere Drehenergie stoßfrei absorbiert werden kann. Durch den zusätzlichen Stoßdämpfer 34 kann die Entlüftungssteuerung 33 weitgehend unabhängig von der Masse des jeweiligen Werkstücktisches arbeiten, da überschießende Drehenergie in dem Stoßdämpfer 34 vernichtet wird. Dies trägt zu einem einfachen konstruktiven Aufbau bei.

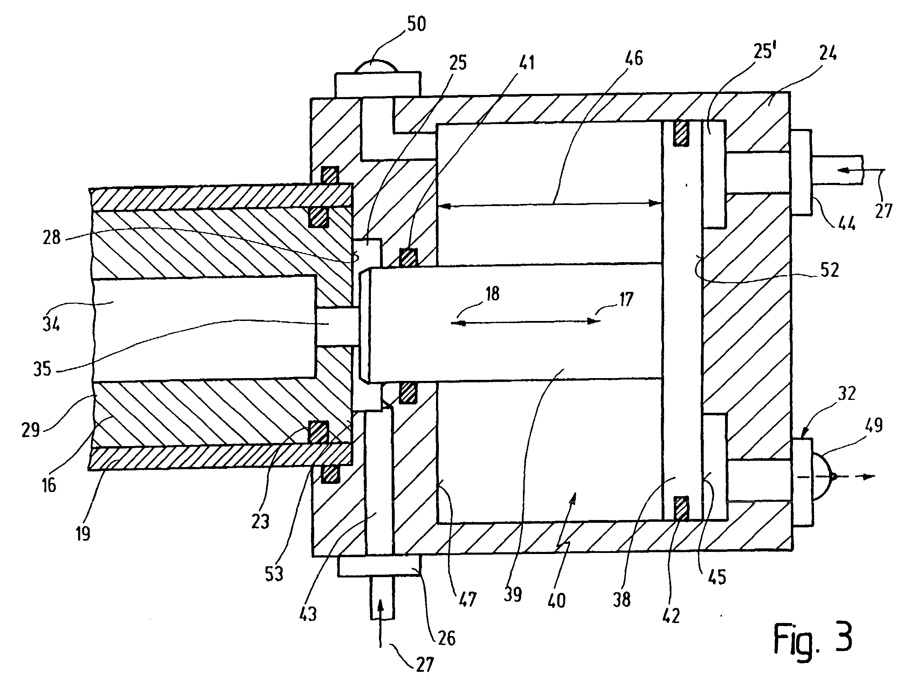

In Fig. 3 ist jetzt ein zweites Ausführungsbeispiel des Verstellantriebes 21 gezeigt, der gegenüber der Ausführung gemäß Fig. 2 konstruktiv weitere Vereinfachungen mit sich bringt.

In dem Gehäuse 24 des Verstellantriebes 21 ist jetzt ein Hilfs-Schubkolben 38 vorgesehen, der mit seiner Kolbenstange 39 in Anlage mit der Stirnseite 28 der Zahnstange 16 ist. Hilfs-Schubkolben 38 sowie Kolbenstange 39 bilden einen Hilfs-Verstellantrieb 40, der durch Dichtungen 41 und 42 druckdicht in dem Gehäuse 24 angeordnet ist.

Der Druckluftanschluß 26 zur Betätigung der als Schubkolben 29 wirkenden Zahnstange 16 ist jetzt durch eine radiale Bohrung 43 realisiert, durch die nach wie vor Medium 27 die Stirnseite 28 der Zahnstange 16 beaufschlagt.

Zur Betätigung des Hilfs-Schubkolbens 38 ist ein weiterer Druckluftanschluß 44 vorgesehen, über den das Betätigungsmedium 27 den Hilfs-Schubkolben 38 in einer Druckkammer 25' an seiner Schubseite 45 beaufschlagt.

Bei einer derartigen Beaufschlagung mit Betätigungsmedium 27 wird der Hilfs-Schubkolben in Richtung des Pfeiles 18 in Fig. 3 nach links bewegt, wobei er einen Hub 46 ausführt und schließlich gegen einen Anschlag 47 läuft, der die Hubbewegung 46 begrenzt. Dieser Hub 46 ist deutlich kürzer als der gesamte Hub der Zahnstange 16, wobei jedoch aus Fig. 3 zu erkennen ist, daß die Schubseite 45 des Hilfs-Schubkolbens 38 eine deutlich größere Fläche aufweist als die Stirnseite 28 der Zahnstange 16. Da beide Druckluftanschlüsse 26 und 44 mit demselben Medium, z.B. Druckluft mit 6 bar beaufschlagt werden, übt der Hilfs-Verstellantrieb 40 eine deutlich größere Vorschubkraft auf die Zahnstange 16 aus als dies über die Stirnseite 28 möglich ist. Allerdings wirkt diese erhöhte Vorschubkraft nur während des anfänglichen Hubes 46, danach läuft die Zahnstange 16 in Fig. 3 in Richtung des Pfeiles 18 nach links, wobei jetzt die Vorschubkraft nur noch durch das Medium 27 im Zusammenwirken mit der Stirnseite 28 aufgebracht wird.

Mit anderen Worten, zu Beginn der Hubbewegung der Zahnstange 16 wird über den Hilfs-Verstellantrieb 40 eine zusätzliche Vorschubkraft auf die Zahnstange 16 ausgeübt, so daß der Drehtisch 10 schnell seine Drehgeschwindigkeit einnimmt. Die geringere Vorschubkraft über die Stirnseite 28 sorgt dann lediglich noch dafür, daß die Lagerreibung etc. überwunden wird.

Das Abbremsen der Zahnstange 16 in ihren Endlagen erfolgt ähnlich wie bereits im Zusammenhang mit Fig. 2 beschrieben an dem identisch aufgebauten anderen Verstellantrieb 22. Über das Ventil 32 wird wieder ein Gegendruck aufgebaut, der für ein weiches Abfangen der Zahnstange 16 sorgt. Ferner ist zwischen Zahnstange 16 und Kolbenstange 39 wieder der Stoßdämpfer 34 vorgesehen, dessen Kolben 35 in der in Fig. 3 gezeigten Stellung völlig eingeschoben wurde.

Um jedoch den konstruktiven Aufbau weiter zu vereinfachen, ist das Ventil 32 hier als Drosselventil 49 ausgebildet, so daß auf die Entlüftungssteuerung 33 verzichtet werden kann. Das Drosselventil 49 sorgt jetzt für den Aufbau eines Gegendrucks in der Druckkammer 25'. Sobald dieser Gegendruck einen durch das Drosselventil 49 vorbestimmten Wert erreicht hat, wird dieser Druck gehalten, so daß die restliche Druckluft über das Ventil 32 entlüftet wird. Auf diese Weise wird ein gesteuerter Gegendruck erreicht, ohne daß größere Steuervorrichtungen erforderlich sind. Es ist auch möglich, daß das Drosselventil erst bei Erreichen einer bestimmten Kolbenstellung öffnet.

Alternativ kann das Drosselventil 49 auch einen konstanten Drosselquerschnitt aufweisen, so daß durch eine konstante Abfuhr der Abluft eine kontinuierliche Entlüftung des entsprechenden Druckraumes 25, 25' möglich wird, so daß sich auch hier ein Druck zunächst auf- und dann nach Beendigung des Hubes wieder abbaut.

Der Einsatz eines Drosselventils 49 ist bei dem Ausführungsbeispiel aus Fig. 3 unter anderem deshalb möglich, weil die Druckkammer 25 gegenüber der Druckkammer 25' abgedichtet ist. Die Druckkammer 25 weist in Richtung des Doppelpfeiles 17/18 eine deutlich größere Länge auf als die Druckkammer 25', da der Hub 46 des Hilfs-Schubkolbens 38 lediglich einen geringen Teil des gesamten Hubes der Zahnstange 16 zwischen ihren beiden Endlagen repräsentiert.

Die Druckerhöhung in der relativ kleinen Druckkammer 25' sorgt jetzt im Zusammenwirken mit dem einfachen Drosselventil 49 dafür, daß sich ein gesteuerter Gegendruck aufbaut, der die Drehenergie des Werkstücktisches bei Annäherung an seine Endstellung zumindest teilweise kompensiert. Die übrigbleibende Energie wird wie schon anhand von Fig. 2 beschrieben durch den Stoßdämpfer 35 aufgefangen.

Verglichen mit dem Ausführungsbeispiel gemäß Fig. 2 sind bei dem Ausführungsbeispiel gemäß Fig. 3 sowohl die Dämpfungsvorrichtung 32, 49, 34, 35 als auch der Hilfs-Verstellantrieb 40 deutlich einfacher aufgebaut, weder der Kompressor 36 noch die Entlüftungssteuerung 33 sind erforderlich, da diese Funktionen durch den einen begrenzten Hub 46 ausführenden Hilfs-Schubkolben 38 bzw. das Drosselventil 49 übernommen werden.

Es sei noch bemerkt, daß zur Entlüftung in dem Gehäuse 24 weiter eine Entlüftung 50 vorgesehen ist, so daß das vor dem Hilfs-Schubkolben 38 befindliche Medium entweichen kann.

Schließlich ist in Fig. 3 noch ein Anschlag 52 erkennbar, gegen den der Hilfs-Schubkolben 38 läuft, wenn er seinen durch die zurücklaufende Zahnstange 16 bewirkten Rückhub durchführt. Die Zahnstange 16 selbst läuft nach wie vor gegen einen weiteren Anschlag 53, der im wesentlichen dem Anschlag 31 aus Fig. 2 entspricht.

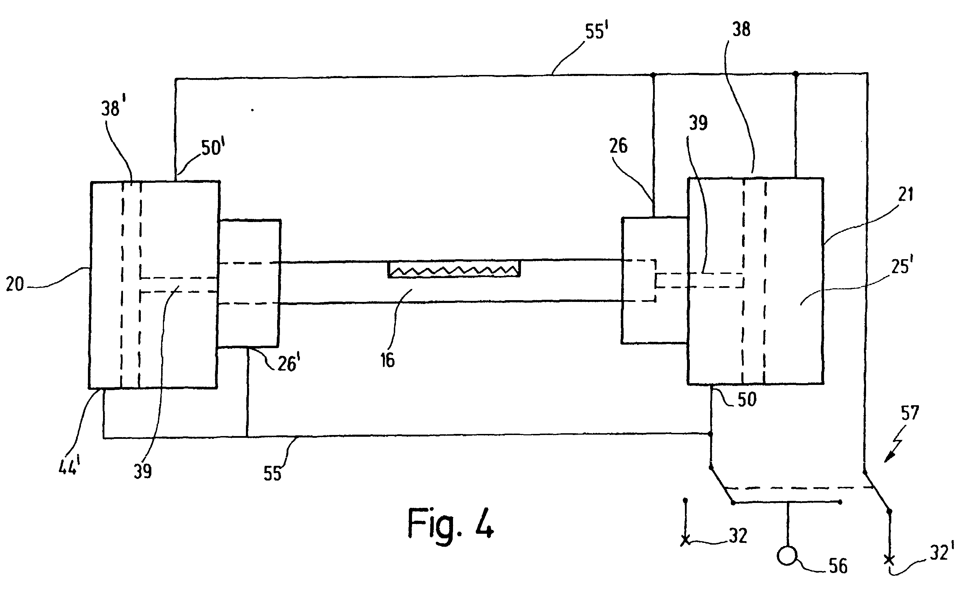

In Fig. 4 ist in einer Prinzipskizze die Druckluftsteuerung für den Werkstücktisch aus Fig. 1 gezeigt, wobei der Verstellantrieb 20, 21 hier in einem weiteren Ausführungsbeispiel gezeigt ist. Aus Gründen der Übersichtlichkeit wurde auf die Darstellung des Werkstücktisches selbst in Fig. 4 verzichtet.

In der Fig. 4 sind jetzt beide Verstellantriebe 20, 21 dargestellt, die über Druckluftleitungen 55 und 55' mit einer Druckluftquelle 56 verbunden sind. Zwischen der Druckluftquelle 56 und den Druckluftleitungen 55, 55' ist ein Umschalter 57 vorgesehen, der entweder die Druckluftleitung 55 oder aber die Druckluftleitung 55' mit der Druckluftquelle 56 verbindet. Die jeweils andere Druckluftleitung 55' bzw. 55 ist durch den Umschalter 57 zwangsweise mit dem Ventil 32' bzw. 32 zur gesteuerten Entlüftung verbunden.

Die Druckluftleitung 55 ist mit der Entlüftung 50 des Verstellantriebes 21 sowie mit den Druckluftanschlüssen 26' und 44' des Verstellantriebes 20 verbunden. In gleicher Weise ist die Druckluftleitung 55' mit der Entlüftung 50' des Verstellantriebes 20 sowie mit den Druckluftanschlüssen 26 und 44 des Verstellantriebes 21 verbunden.

Wenn jetzt z.B. die Druckluftleitung 55 mit der Druckluftquelle 56 verbunden ist, dann wird die Zahnstange 16 über den Hilfs-Schubkolben 38' sowie über ihre Stirnseite 28 in Fig. 4 nach rechts verschoben. Gleichzeitig wird auch der Hilfs-Schubkolben 38 des Verstellantriebes 21 nach rechts verschoben, wozu die Entlüftung 50 mit Druckluft beaufschlagt wird. Auf diese Weise muß der Verstellantrieb 21 lediglich die Zahnstange 16 und den Werkstücktisch bewegen, während der Hilfs-Schubkolben 38 sozusagen durch einen eigenen Energieantrieb in der Fig. 4 nach rechts bewegt wird. Auf diese Weise reduziert sich die von dem Verstellantrieb 20 zu bewegende Masse verglichen mit dem Ausführungsbeispiel der Fig. 3, wo der jeweils nicht zum Schub verwendete Hilfs-Schubkolben 38 von dem jeweils anderen Verstellantrieb 20, 21 mit verschoben werden mußte.

Wegen der geringeren zu bewegenden Masse erhöht sich hierdurch noch einmal die Verstellgeschwindigkeit für den Werkstücktisch.

Während dieses Verschiebens der Zahnstange 16 in Fig. 4 nach rechts wirkt die Druckluftleitung 55' als Abluftleitung, wozu der Umschalter 57 die Druckluftleitung 55' mit dem Ventil 32' verbunden hat. Durch das Ventil 32', das ein Drosselventil mit konstantem Querschnitt ist, werden jetzt die in Fig. 3 zu erkennenden Druckkammern 25 und 25' entlüftet, was bedeutet, daß die Druckluftanschlüsse 26 und 44 jetzt der Entlüftung dienen. Die Bedämpfung der Bewegung der Zahnstange 16 erfolgt hier jetzt vorrangig über den Druck in der Druckkammer 25 vor der Stirnseite 28 der Zahnstange 16. Erst dann, wenn die Zahnstange 16 in Anlage mit der Kolbenstange 39 des Hilfs-Schubkolbens 38 gelangt, wirkt auch die Druckkammer 25' dämpfend, wobei jetzt auch der Stoßdämpfer 34 zum Einsatz kommt.

Soll die Zahnstange 16 in Fig. 4 nach links verschoben werden, so schaltet der Umschalter 57 um und verbindet die Druckluftleitung 55' mit der Druckluftquelle 56, während die Druckluftleitung 55 mit dem Ventil 32 verbunden wird. Im übrigen ist die Arbeitsweise dann genauso wie vorstehend für die umgekehrte Bewegungsrichtung beschrieben.

## Patentansprüche

1. Werkstücktisch (10) für eine Werkzeugmaschine, der zwischen zwei Endstellungen hin- und herbewegbar ist und einen Verdrehantrieb (11) aufweist, der ein mit dem Werkstücktisch (10) zu dessen Verdrehen verbundenes Zahnradteil (15), eine mit diesem in Eingriff befindliche Zahnstange (16) sowie einen mediumsbetätigten Verstellantrieb (20, 21) zum Verschieben der Zahnstange (16) aufweist, die dabei eine durch Anschläge (31, 53) begrenzte Hubbewegung zwischen zwei den Endstellungen des Werkstücktisches (10) entsprechenden Endlagen durchführt,
**dadurch gekennzeichnet, daß** eine Vorrichtung (36; 40) vorgesehen ist, die die Zahnstange (16) zu Beginn der Hubbewegung mit einer höheren Vorschubkraft als während des restlichen Hubes beaufschlagt.

2. Werkstücktisch nach Anspruch 1, **dadurch gekennzeichnet, daß** die Vorrichtung (36; 40) einen Hilfs-Verstellantrieb (40) umfaßt, der die Zahnstange (16) zu Beginn der Hubbewegung vorübergehend mit einer zusätzlichen Vorschubkraft beaufschlagt.

3. Werkstücktisch nach Anspruch 2, **dadurch gekennzeichnet, daß** der Hilfs-Verstellantrieb (40) mediumsbetätigt ist.

4. Werkstücktisch nach Anspruch 2 oder Anspruch 3, **dadurch gekennzeichnet, daß** für jede Hubrichtung der Zahnstange (16) ein Hilfs-Verstellantrieb (40) vorgesehen ist.

5. Werkstücktisch nach einem der Ansprüche 2 bis 4, **dadurch gekennzeichnet, daß** der Verstellantrieb (20, 21) an beiden Stirnseiten (28) der Zahnstange (17) je einen auf diese wirkenden Schubkolben umfaßt und der Hilfs-Verstellantrieb (40) an den beiden Stirnseiten (28) je einen auf diese wirkenden Hilfs-Schubkolben (38) beinhaltet, der vorzugsweise eine größere Kolbenfläche aufweist als der Schubkolben und einen kürzeren Hub (46) als dieser durchführt.

6. Werkstücktisch nach einem der Ansprüche 2 bis 5, **dadurch gekennzeichnet, daß** die Zahnstange (16) als doppelt-mediumsbetätigter Schubkolben (29) ausgebildet ist, auf dessen beide Stirnseiten (28) abwechselnd ein Betätigungsmedium (27) sowie je ein Hilfs-Schubkolben (38) wirkt, der einen größeren Durchmesser als die Zahnstange (16) an ihren Stirnseiten (28) aufweist und einen kürzeren Hub (46) als die Zahnstange (16) durchführt.

7. Werkstücktisch nach Anspruch 6, **dadurch gekennzeichnet, daß** jeder Hilfs-Schubkolben (38) mit seiner Kolbenstange (29) auf die zugeordnete Stirnseite (28) der Zahnstange (16) wirkt, wobei ein Anschlag (47) für den Hilfs-Schubkolben (38) zur Begrenzung des von diesem durchgeführten Hubes (46) vorgesehen ist.

8. Werkstücktisch nach einem der Ansprüche 1 bis 7, **dadurch gekennzeichnet, daß** zwei Dämpfungsvorrichtungen (34, 32) vorgesehen sind, die jeweils zwischen einem Anschlag (31, 53) für die Zahnstange (16) und dieser selbst wirken, um den sich drehenden Werkstücktisch (10) in seinen Endstellungen abzubremsen.

9. Werkstücktisch nach Anspruch 8, **dadurch gekennzeichnet, daß** die Dämpfungsvorrichtung (32) einen gesteuerten Gegendruck zum gezielten Abbremsen der sich bewegenden Zahnstange (16) aufbaut.

10. Werkstücktisch nach Anspruch 8 und einem der Ansprüche 4 bis 7, **dadurch gekennzeichnet, daß** die jeweilige Dämpfungsvorrichtung (32) an dem Verstellantrieb (20, 21) und/oder dem Hilfs-Verstellantrieb (40) ausgebildet ist.

11. Werkstücktisch nach Anspruch 9 oder Anspruch 10, **dadurch gekennzeichnet, daß** die Dämpfungsvorrichtung (32) bei dem jeweils nicht zum Antrieb der Zahnstange (16) verwendeten Hilfs-Schubkolben (38) auf dessen Schubseite (45) und/oder auf der zugeordneten Stirnseite (28) der Zahnstange (16) einen Gegendruck erzeugt, der während des durch die Zahnstange (16) bewirkten Rückhubes dieses Hilfs-Schubkolbens (38) die Hubbewegung der Zahnstange (16) abbremst.

12. Werkstücktisch nach einem der Ansprüche 8 bis 11, **dadurch gekennzeichnet, daß** der Gegendruck einen gesteuerten Druckverlauf aufweist.

13. Werkstücktisch nach einem der Ansprüche 9 bis 12, **dadurch gekennzeichnet, daß** jeder Hilfs-Schubkolben (38) auf seiner Schubseite (45) eine durch ein Entlüftungsventil (32) zu entlüftende Druckkammer (25') aufweist, und die Entlüftung der Druckkammer (25') während des durch die Zahnstange (16) bewirkten Rückhubes derart gezielt freigegeben wird, daß sich zur Dämpfung zunächst ein hoher Gegendruck aufbaut, der entlüftet oder begrenzt wird, wenn die Zahnstange (16) sich ihrer Endlage nähert.

14. Werkstücktisch nach einem der Ansprüche 9 bis 13, **dadurch gekennzeichnet, daß** der Schubkolben (29) an seinen Stirnseiten (28) jeweils eine durch ein Entlüftungsventil zu entlüftende Druckkammer (25) aufweist, und die Entlüftung der Druckkammer (25) während des durch die Zahnstange (16) bewirkten Rückhubes derart gezielt freigegeben wird, daß sich zur Dämpfung zunächst ein hoher Gegendruck aufbaut, der entlüftet oder begrenzt wird, wenn die Zahnstange (16) sich ihrer Endlage nähert.

15. Werkstücktisch nach einem der Ansprüche 1 bis 14, **dadurch gekennzeichnet, daß** jede Dämpfungsvorrichtung (34, 32) einen Stoßdämpfer (34) umfaßt, der zwischen Zahnstange (16) und Anschlag (31, 53) wirkt.

16. Werkstücktisch nach einem der Ansprüche 1 bis 15, **dadurch gekennzeichnet, daß** der Stoßdämpfer (34) zwischen Zahnstange (16) und Hilfs-Schubkolben (38) wirkt.

17. Werkstücktisch nach Anspruch 15 oder Anspruch 16, **dadurch gekennzeichnet, daß** der Stoßdämpfer in der Zahnstange (16) und/oder der Kolbenstange (39) des Hilfs-Schubkolbens (38) angeordnet ist.

18. Werkstücktisch nach einem der Ansprüche 13 bis 17, **dadurch gekennzeichnet, daß** das gesteuerte Ventil (32) ein Drosselventil (49) ist, das bei Erreichen eines Öffnungsdruckes oder einer bestimmten Stellung des Kolbens (12) vorzugsweise automatisch die Druckkammer (25') entlüftet.

19. Werkstücktisch nach einem der Ansprüche 13 bis 17, **dadurch gekennzeichnet, daß** das gesteuerte Ventil (32) ein Drosselventil ist, das mit konstantem Drosselquerschnitt arbeitet.

20. Hilfs-Verstellantrieb für einen Verdrehantrieb (11) für einen Werkstücktisch (10) einer Werkzeugmaschine, der zwischen zwei Endstellungen hin- und herbewegbar ist, wobei der Verdrehantrieb ein mit dem Werkstücktisch (10) zu dessen Verdrehen verbundenes Zahnradteil (15), eine mit diesem in Eingriff befindliche Zahnstange (16) sowie einen mediumsbetätigten Verstellantrieb (20, 21) zum Verschieben der Zahnstange (16) aufweist, die dabei eine durch Anschläge (31, 53) begrenzte Hubbewegung zwischen zwei den Endstellungen des Werkstücktisches (10) entsprechenden Endlagen durchführt, wobei der Hilfs-Verstellantrieb (40) die Zahnstange (16) zu Beginn der Hubbewegung vorübergehend mit einer zusätzlichen Vorschubkraft beaufschlagt.

21. Hilfs-Verstellantrieb nach Anspruch 20, **dadurch gekennzeichnet, daß** er der in den Ansprüchen 3 bis 7 weitergebildete Hilfs-Verstellantrieb (40) ist.

22. Hilfs-Verstellantrieb nach Anspruch 20 oder Anspruch 21, **dadurch gekennzeichnet, daß** er eine Dämpfungsvorrichtung (34, 32) umfaßt, die an seiner Schubseite (45) während des durch die Zahnstange (16) bewirkten Rückhubes einen gesteuerten Gegendruck zum gezielten Abbremsen der Zahnstange (16) aufbaut.

23. Hilfs-Verstellantrieb nach Anspruch 22, **dadurch gekennzeichnet, daß** die Dämpfungsvorrichtung (34, 32) die in den Ansprüchen 13 bis 17 weitergebildete Dämpfungsvorrichtung (34, 32) ist.

## Claims

1. A workpiece table (10) movable back and forth between two end positions, provided for a machine tool, comprising a rotational drive (11) having a gear part (15) joined to said workpiece table (10) for rotation thereof, a toothed rack (16) in engagement with said gear part, as well as a medium-actuated shift drive (20, 21) for displacing the toothed rack (16) which thereby performs a stroke movement, limited by stops (31, 53), between two end locations corresponding to the end positions of the workpiece table (10),
**characterized in that** a mechanism (36; 40) is provided that acts upon the toothed rack (16) at the beginning of the stroke movement with a higher feed force than during the remainder of the stroke.

2. The workpiece table of claim 1, **characterized in that** the mechanism (36; 40) comprises an auxiliary shift drive (40) which temporarily acts upon the toothed rack (16) at the beginning of the stroke movement with an additional feed force.

3. The workpiece table of claim 2, **characterized in that** the auxiliary shift drive (40) is medium-actuated.

4. The workpiece table of claim 2 or claim 3, **characterized in that** an auxiliary shift drive (40) is provided for each stroke direction of the toothed rack (16).

5. The workpiece table of any of claims 2 - 4, **characterized in that** the shift drive (20, 21) comprises each one thrust piston at both end faces (28) of the toothed rack (17) acting respectively thereon, and the auxiliary shift drive (40) contains at the two end faces (28) each one auxiliary thrust piston (28) acting respectively thereon, which preferably have a greater piston surface area than the thrust pistons and a shorter stroke (46) as the latter.

6. The workpiece table of any of claims 2 - 5, **characterized in that** the toothed rack (16) is configured as a bidirectionally medium-actuated thrust piston (29), on whose both end faces (28) an actuation medium (27) as well as a respective auxiliary thrust piston (38) act alternately, which auxiliary thrust piston has a greater diameter than the toothed rack 16 at its end faces (28) and performs a shorter stroke (46) than the toothed rack (16).

7. The workpiece table of claim 6, **characterized in that** each auxiliary thrust piston (38) acts with its piston rod (29) on the associated end face (28) of the toothed rack (16), whereby a stop (47) for the auxiliary thrust piston (38) is provided to delimit the stroke (56) performed by the latter.

8. The workpiece table of any of claims 1 - 7, **characterized in that** two damping mechanisms (34, 32) are provided, each acting between a stop (31, 53) for the toothed rack (16) and the latter itself in order to decelerate the rotating workpiece table (10) in its end positions.

9. The workpiece table of claim 8, **characterized in that** the damping mechanism (32) builds up a regulated counterpressure for controlled deceleration of the moving toothed rack (16).

10. The workpiece table of claim 8 and any of claims 4 - 7, **characterized in that** the respective damping mechanism (32) is configured on the shift drive (20, 21) and/or on the auxiliary shift drive (40).

11. The workpiece table of claim 9 or claim 10, **characterized in that** the damping mechanism (32) generates, on the thrust side (45) of the auxiliary thrust piston not presently being used to drive the toothed rack (16) and/or on the associated end face (28) of the toothed rack (16), a counterpressure which decelerates the stroke movement of the toothed rack (16) during the return stroke of said auxiliary thrust piston (38) effected by the toothed rack (16).

12. The workpiece table of any of claims 8 - 11, **characterized in that** the counterpressure has a regulated pressure profile.

13. The workpiece table of any of claims 9 - 12, **characterized in that** each auxiliary thrust piston (38) has on its thrust side (45) a pressure chamber (25') to be vented by a vent valve (32), and the venting of the pressure chamber (25') is enabled in controlled fashion, during the return stroke effected by the toothed rack (16), in such a way that a high counterpressure initially builds up for damping purposes, which counterpressure is vented or limited when the toothed rack (16) approaches its end location.

14. The workpiece table of any of claims 9 - 13, **characterized in that** the thrust piston (29) at its end faces (28) each has a pressure chamber (25) to be vented by a vent valve, and that the venting of the pressure chamber (25) is enabled in controlled fashion, during the return stroke of the toothed rack (16), in such a way that a high counterpressure initially builds up for damping purposes, the counterpressure being vented or limited when the toothed rack (16) approaches its end location.

15. The workpiece table of any of claims 1 - 14, chacterized in that each damping mechanism (34, 32) comprises a shock absorber (34) acting between toothed rack (16) and stop (31, 53).

16. The workpiece table of any of claims 1 - 15, **characterized in that** the shock absorber (34) acts between toothed rack (16) and auxiliary thrust piston (38).

17. The workpiece table of claim 15 or claim 16, **characterized in that** the shock absorber is arranged in the toothed rack (16) and/or in the piston rod (39) of the auxiliary thrust piston (38).

18. The workpiece table of any of claims 13 - 17, **characterized in that** the regulated valve (32) is a throttling valve (49) that preferably automatically vents the pressure chamber (25') when an opening pressure or a specific position of the piston (12) is reached.

19. The workpiece table of any of claims 13 - 17, **characterized in that** the regulated valve (32) is a throttling valve operating with a constant throttling cross section.

20. An auxiliary shift drive for a rotational drive (11) for a workpiece table (10) of a machine tool, the workpiece table being movable back and forth between two end positions, wherein the rotational drive has a gear part (15) joined to the workpiece table (10) for rotation thereof, a toothed rack (16) in engagement with the gear part, as well as a medium-actuated shift drive (20, 21) for displacement of the toothed rack (16), which thereby performs a stroke movement, delimited by stops (31, 53), between two end locations corresponding to the end positions of the workpiece table (10), whereby the auxiliary shift drive (40) acts temporarily on the toothed rack (16) with an additional feed force at the beginning of the stroke movement.

21. The auxiliary shift drive of claim 20, **characterized in that** it is the auxiliary shift drive (20) set forth in claims 3 to 7.

22. The auxiliary shift drive of claim 20 or claim 21, **characterized in that** it comprises a damping mechanism (34, 32) which builds up at its thrust side (45) during the return stroke effected by the toothed rack (16) a regulated counterpressure for controlled deceleration of the moving toothed rack.

23. The auxiliary shift drive of claim 22, **characterized in that** the damping mechanism (34, 32) is the damping mechanism (34, 32) as set forth in claims 13 through 17.

## Revendications

1. Table porte-pièce (10) destinée à une machine-outil, qui est susceptible d'effectuer un mouvement de va-et-vient entre deux positions terminales et qui comprend un entraînement en torsion (11) qui comporte une partie formant roue dentée (15) reliée à la table porte-pièce (10) pour assurer sa torsion, une crémaillère (16) en prise avec celle-ci ainsi qu'un entraînement en déplacement (20, 21) actionné par un fluide, destiné à déplacer la crémaillère (16) qui décrit, dans ce cas, une course, limitée par des butées (31, 53), entre deux positions finales qui correspondent aux positions terminales de la table porte-pièce (10)
**caractérisée en ce qu'**est prévu un dispositif (36 ; 40) qui, au début de la course, sollicite la crémaillère (16) avec une force d'avancement plus importante que pendant le reste de la course.

2. Table porte-pièce selon la revendication 1, **caractérisée en ce que** le dispositif (36 ; 40) comprend un entraînement auxiliaire en déplacement (40) qui sollicite temporairement la crémaillère (16), au début de la course, avec une force d'avancement supplémentaire.

3. Table porte-pièce selon la revendication 2, **caractérisée en ce que** l'entraînement auxiliaire en déplacement (40) est actionné par un fluide.

4. Table porte-pièce selon la revendication 2 ou la revendication 3, **caractérisée en ce qu'**un entraînement auxiliaire en déplacement (40) est prévu pour chaque direction de déplacement de la crémaillère (16).

5. Table porte-pièce selon l'une des revendications 2 à 4, **caractérisée en ce que** l'entraînement en déplacement (20, 21) comprend, aux deux faces frontales (28) de la crémaillère (16), respectivement un piston pousseur agissant sur celles-ci, et **en ce que** l'entraînement auxiliaire en déplacement (40) contient, aux deux faces frontales (28), respectivement un un piston pousseur auxiliaire (38) agissant sur celles-ci qui présente, de préférence, une plus grande surface formant piston que le piston pousseur, et qui décrit une course (46) plus courte que celui-ci.

6. Table porte-pièce selon l'une des revendications 2 à 5, **caractérisée en ce que** la crémaillère (16) est conformée en piston pousseur (29) à double actionnement par fluide, sur les deux faces frontales (28) duquel agit, alternativement, un fluide d'actionnement (27) ainsi que respectivement un piston pousseur auxiliaire (38) dont les faces frontales (28) présentent un diamètre plus important que la crémaillère (16) et qui décrit une course (46) plus courte que la crémaillère (16).

7. Table porte-pièce selon la revendication 6, **caractérisée en ce que** la tige de piston (29) de chaque piston pousseur auxiliaire (38) agit sur la face frontale (28) associée de la crémaillère (16), une butée (47) destinée au piston pousseur auxiliaire (38) étant prévue pour délimiter la course (46) qu'il décrit.

8. Table porte-pièce selon l'une des revendications 1 à 7, caràctérisée en ce que sont prévus deux dispositifs amortisseurs (34, 32) qui agissent respectivement entre une butée (31, 53) destinée à la crémaillère (16), et cette dernière, afin de freiner la table porte-pièce (10) qui tourne et lui faire atteindre sa position terminale.

9. Table porte-pièce selon la revendication 8, **caractérisée en ce que** le dispositif amortisseur (32) exerce une contre-pression commandée pour freiner de façon ciblée la crémaillère (16) qui se déplace.

10. Table porte-pièce selon la revendication 8 et l'une des revendications 4 à 7, **caractérisée en ce que** chaque dispositif amortisseur (32) est monté sur l'entraînement en déplacement (20, 21) et/ou sur l'entraînement auxiliaire en déplacement (40).

11. Table porte-pièce selon la revendication 9 ou la revendication 10, **caractérisée en ce que** le dispositif amortisseur (32), dans le cas du piston pousseur auxiliaire (38) qui n'est pas utilisé pour entraîner la crémaillère (16), exerce, sur sa face de poussée (45) et/ou sur la face frontale (28) associée de la crémaillère (16), une contre-pression qui freine la course de la crémaillère (16) pendant la course de retour, provoquée par la crémaillère (16), de ce piston pousseur auxiliaire (38).

12. Table porte-pièce selon l'une des revendications 8 à 11, **caractérisée en ce que** la contre-pression présente une allure commandée.

13. Table porte-pièce selon l'une des revendications 9 à 12, **caractérisée en ce que** chaque piston pousseur auxiliaire (38) présente, sur sa face de poussée (45), une chambre de pression (25') à purger au moyen d'une soupape de purge (32), et **en ce que** la purge de la chambre de pression (25'), pendant la course de retour provoquée par la crémaillère (16), est déclenchée de façon ciblée de telle sorte que, pour assurer l'amortissement, il se forme d'abord une contre-pression élevée, qui est purgée ou limitée lorsque la crémaillère (16) se rapproche de sa position finale.

14. Table porte-pièce selon l'une des revendications 9 à 13, **caractérisée en ce que** le piston pousseur (29) présente, sur ses faces frontales (28), respectivement une chambre de pression (25) à purger au moyen d'une soupape de purge, et **en ce que** la purge de la chambre de pression (25), pendant la course de retour provoquée par la crémaillère (16), est déclenchée de façon ciblée de telle sorte que, pour assurer l'amortissement, il se forme d'abord une contre-pression élevée, qui est purgée ou limitée lorsque la crémaillère (16) se rapproche de sa position finale.

15. Table porte-pièce selon l'une des revendications 1 à 14, **caractérisée en ce que** chaque dispositif amortisseur (34, 32) comprend un amortisseur de chocs (34) qui agit entre la crémaillère (16) et la butée (31, 53).

16. Table porte-pièce selon l'une des revendications 1 à 15, **caractérisée en ce que** l'amortisseur de chocs (34) agit entre la crémaillère (16) et le piston pousseur auxiliaire (38).

17. Table porte-pièce selon la revendication 15 ou la revendication 16, **caractérisée en ce que** l'amortisseur de chocs est monté dans la crémaillère (16) et/ou dans la tige de piston (39) du piston pousseur auxiliaire (38).

18. Table porte-pièce selon l'une des revendications 13 à 17, **caractérisée en ce que** la soupape commandée (32) est une soupape d'étranglement (49) qui, lorsqu'est atteinte une pression d'ouverture ou une position déterminée du piston (12) purge, de préférence automatiquement, la chambre sous pression (25').

19. Table porte-pièce selon l'une des revendications 13 à 17, **caractérisée en ce que** la soupape commandée (32) est une soupape d'étranglement qui fonctionne avec une section d'étranglement constante.

20. Entraînement auxiliaire en déplacement destiné à un entraînement en torsion (11) destiné à une table porte-pièce (10) d'une machine-outil, qui est susceptible d'effectuer un mouvement de va-et-vient entre deux positions terminales, l'entraînement en torsion comprenant une partie formant roue dentée (15) reliée à la table porte-pièce (10) pour assurer sa torsion, une crémaillère (16) en prise avec celle-ci ainsi qu'un entraînement en déplacement (20, 21) actionné par un fluide, destiné à déplacer la crémaillère (16) qui décrit, dans ce cas, une course, limitée par des butées (31, 53), entre deux positions finales qui correspondent aux positions terminales de la table porte-pièce (10), l'entraînement auxiliaire en déplacement (40) sollicitant temporairement la crémaillère (16), au début de la course, avec une force d'avancement supplémentaire.

21. Entraînement auxiliaire en déplacement selon la revendication 20, **caractérisé en ce qu'**il est l'entraînement auxiliaire en déplacement (40) décrit dans les revendications 3 à 7.

22. Entraînement auxiliaire en déplacement selon la revendication 20 ou la revendication 21, **caractérisé en ce qu'**il comprend un dispositif amortisseur (34, 32) qui exerce, sur sa face de poussée (45), lors de la course de retour provoquée par la crémaillère (16), une contre-pression commandée afin de freiner, de façon ciblée, la crémaillère (16).

23. Entraînement auxiliaire en déplacement selon la revendication 22, **caractérisé en ce que** le dispositif amortisseur (34, 32) est le dispositif amortisseur (34, 32) décrit dans les revendications 13 à 17.
